Europäisches Patentamt

European Patent Office

Office européen des brevets

(19)

(11) **EP 0 660 503 B1**

(12) **EUROPÄISCHE PATENTSCHRIFT**

(45) Veröffentlichungstag und Bekanntmachung des Hinweises auf die Patenterteilung:
**29.01.1997  Patentblatt 1997/05**

(51) Int Cl.⁶: **H02P 21/00**

(21) Anmeldenummer: **94119940.8**

(22) Anmeldetag: **16.12.1994**

(54) **Verfahren zur Regelung von Flussbetrag und Drehmoment einer Induktionsmaschine**

Method to control the absolute value of flux and torque of an induction machine

Méthode pour commander la valeur absolue de flux et de couple d'une machine à induction

(84) Benannte Vertragsstaaten:
**AT BE CH DE DK LI SE**

(30) Priorität: **21.12.1993  DE 4343627**

(43) Veröffentlichungstag der Anmeldung:
**28.06.1995  Patentblatt 1995/26**

(73) Patentinhaber: **ABB PATENT GmbH**
**D-68309 Mannheim (DE)**

(72) Erfinder:
- **Depenbrock, Manfred, Prof. Dr.-Ing.**
**D-44797 Bochum (DE)**
- **Klaes, Norbert, Dr.**
**D-44575 Castrop-Rauxel (DE)**

(74) Vertreter: **Rupprecht, Klaus, Dipl.-Ing. et al**
**c/o ABB Patent GmbH,**
**Postfach 10 03 51**
**68128 Mannheim (DE)**

(56) Entgegenhaltungen:
**EP-A- 0 228 535**

- **FIFTH EUROPEAN CONF. ON POWER ELECTRONICS AND APPLICATIONS, Bd. 5, Nr. 1, 16. September 1993, Brighton GB, Seiten 115-120, XP 416880; M.P. KAZMIERKOWSKI et al.: 'Improved Torque and Flux Vector Control of PWM Inverter-Fed Induction Motor Drive'**
- **ETEP, Bd. 3, Nr. 4, August 1993, Seiten 277-283; M. SCHRÖDL : 'Sensorless Control of Permanent-Magnet Synchronous Machines at Arbitrary Operating Points Using a Modified 'Inform' Flux Model'**
- **EPE AACHEN, 1989, Aachen DE, Seiten 75-81, XP 143371; M. JÄNECKE et al.: 'Direct Self-Control (DSC), A Novel Method of Controlling Asynchronous Machines In Traction Applications'**

**Beschreibung**

Die Erfindung bezieht sich auf ein Verfahren zur Regelung von Flußbetrag und Drehmoment einer Induktionsmaschine gemäß dem Oberbegriff des Anspruchs 1.

Eine Grundaufgabe für Antriebsregelungen ist es, das Drehmoment der elektrischen Maschine gezielt zu kontrollieren. Dieses Drehmoment ergibt sich als Produkt aus Strom- und Flußgrößen der Maschine. Für Drehfeldmaschinen gilt z.B. für den Drehmoment-Istwert Md pro Polpaar p:

$$\text{Md}/p = \frac{3}{2} \cdot \text{Im}[\overset{*}{\underset{\rightarrow}{\psi}}\mu \cdot \underset{\rightarrow}{\text{is}}] = \frac{3}{2} \cdot [\psi\alpha a \cdot i\beta a - \psi\beta a \cdot i\alpha a]$$

wobei

$\underset{\rightarrow}{\psi}\overset{*}{\mu}$ = ψαa -j·ψβa      konjungiert komplexer Raumzeiger der Ständerflußverkettungen,
$\underset{\rightarrow}{\text{is}}$ = iαa+j.iβa =      Ständerstrom-Raumzeiger
iαa =      ia
iβa =

$$\frac{1}{\sqrt{3}} \text{ (ib-ic)}$$

iαa, iβa =      orthogonale Komponenten des Ständerstrom-Raumzeigers,
ia, ib, ic =      Ständerströme,
ψαa, ψβa =      orthogonale Komponenten des Ständerfluß-Raumzeigers.

Für die Flußverkettungen gelten entsprechende Gleichungen.

Die zur Berechnung des Drehmomentes Md notwendigen Stromsignale können im gesamten Ständerfrequenzbereich leicht in analoger oder digitaler Form meßtechnisch aus den Ständerströmen gewonnen werden. Für die Flußverkettungen gibt es dagegen keine praktisch brauchbaren Meßumformer, sie müssen aus anderen leichter meßbaren Größen berechnet werden, z.B. als Teilstruktur eines Motormodells. Im Modell gerechnete Größen werden nachfolgend durch den Index m gekennzeichnet.

Bei Ständerfrequenzen oberhalb von etwa 10% der Nennfrequenz geschieht die Flußberechnung einfach und genau über die Beziehung

$$\underset{\rightarrow}{\psi}\mu = \int [\underset{\rightarrow}{\text{es}} - \underset{\rightarrow}{\text{is}} \cdot \text{Rs}] \, dt$$

wobei

$\underset{\rightarrow}{\psi}\mu$      = Ständerfluß-Raumzeiger

$\underset{\rightarrow}{\text{es}}$      = Raumzeiger der Ständerspannungen,

Rs =      Widerstand der Ständerwicklungen.

Bei Wechselrichtereinspeisung ist allgemein bekannt, wie die Ständerspannungen aus der leicht meßbaren Zwischenkreis-Gleichspannung 2Ed und den an den Wechselrichter gegebenen Schaltbefehlen Sa, Sb, Sc gebildet werden. Aus diesen Größen wird im Wechselrichtermodell der Raumzeiger der Ständerspannungen $\underset{\rightarrow}{\text{esm}}$ berechnet.

Bei sehr niedrigen Frequenzen gehen die von der für die Drehmomentbildung nutzbaren Flußgrundschwingungen induzierten Anteile der Ständerspannungen gegen Null und die Integrationsmethode zur Flußbestimmung wird folglich zu ungenau. Man kann zwar die Fehler der Gleichspannungsmessung, den Differenzfehler des Wechselrichtermodells und den Differenzfehler Rs - Rsm zwischen dem wirklichen Ständerwiderstand Rs und der entsprechenden Größe Rsm des Maschinenmodells dadurch weitgehend eliminieren, daß man die α- und β-Komponenten der gemessenen Ströme $\underset{\rightarrow}{\text{is}}$ und der im Modell berechneten Ströme $\underset{\rightarrow}{\text{ism}}$ vergleicht und mit den Abweichungen die α und β-Komponenten der Spannung $\underset{\rightarrow}{\text{esm}}$ so korrigiert, daß gemessene Ströme und Modellströme praktisch übereinstimmen (siehe M. Jänekke, R. Kremer, G. Steuerwald, Direct-Self-Control (DSC), a novel method of controlling asynchronous machines in traction applications, EPE Aachen, 1989, Seite 75 bis 81), doch selbst dann sind der Modellfluß $\underset{\rightarrow}{\psi}\mu$m und der nicht

meßbare wirkliche Maschinenfluß $\underrightarrow{\psi}$ μ ungleich, wenn nicht gleichzeitig alle Parameter des Maschinenmodells mit den wirklichen Größen ständig exakt in Übereinstimmung gebracht werden.

Im Frequenzbereich oberhalb von etwa 10% der Nennfrequenz gibt es dafür brauchbare Methoden der verschiedensten Art. Bei extrem niedrigen Frequenzen kann der Raumzeiger der Ständerflußverkettungen nur entweder über das - allerdings von Maschine zu Maschine variierende - nicht lineare Sättigungsverhalten der aktiven Eisenstruktur (siehe M. Schrödl, Sensorless control of permanent-magnet synchronous machines at arbitrary operating points using a modified "inform" flux model, ETEP, Vol. 3, No. 4, July/August 1993, Seite 277 bis 283) oder über die gemessene Drehzahl und die genaue Kenntnis sämtlicher Maschinenparameter bestimmt werden. Im zweiten Fall ist dieses Problem für den Rotorwiderstandsparameter Rrm bisher nicht zufriedenstellend gelöst, wenn der sehr hohe Aufwand für eine genaue Messung der mittleren Temperatur der Rotorleiter vermieden werden soll.

Der Erfindung liegt die Aufgabe zugrunde, ein Verfahren zur Regelung von Flußbetrag und Drehmoment einer Induktionsmaschine der eingangs genannten Art anzugeben, das auch bei extrem niedrigen Ständerfrequenzen gute Resultate liefert.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß der temperaturabhängige Rotorwiderstand (Ersatzwiderstand der Rotorleiter) sehr genau nachgebildet wird, wobei der Signalverarbeitungsaufwand deutlich niedriger ist als beispielsweise bei der Kalman-Filterung von Rauschsignalen, zudem die zur Kalman-Filterung benötigten Rauschsignale nicht vorhanden sein müssen.

Das erfindungsgemäße Verfahren stört das normale Betriebsverhalten der Maschine nicht, z.B. weder durch zusätzlich erzeugte Pulsationen des Drehmoments noch durch zusätzliche Schaltungen, die die mittlere Schaltfrequenz erhöhen. Durch die vorgeschlagene exakte Bestimmung des temperaturabhängigen Rotorwiderstandes kann die Induktionsmaschine in allen Betriebsbereichen optimal (mit vollem Fluß) betrieben werden.

Die Erfindung wird nachstehend anhand der in der Zeichnung dargestellten Ausführungsbeispiele erläutert. Es zeigen:

Figur 1    ein adaptives Maschinenmodell für eine Induktionsmaschine mit Stromrichterspeisung,
Figur 2    die Basisstruktur einer Indirekten Selbstregelung.

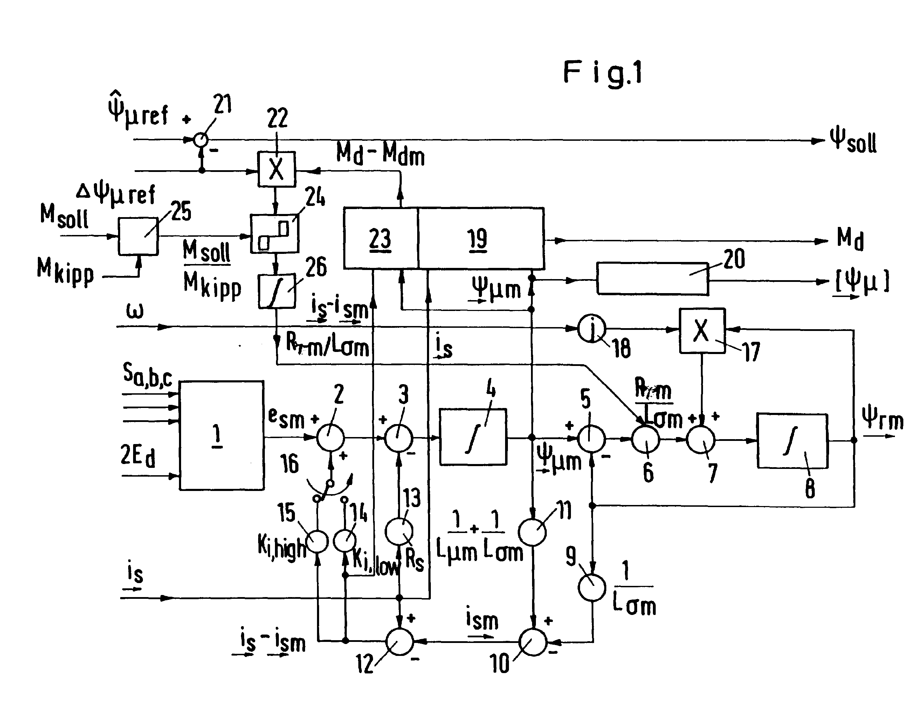

In Figur 1 ist ein adaptives Maschinenmodell für eine stromrichtergespeiste Induktionsmaschine dargestellt. Es ist ein Wechselrichter-Modell 1 zu erkennen, das aus den Schaltsignalen Sa, Sb, Sc für die Wechselrichterstränge und der Zwischenkreisspannung 2Ed (Eingangsgleichspannung des Wechselrichters) einen Modell-Ständerspannungs-Raumzeiger $\underrightarrow{e}$sm bildet und einem Addierer 2 zuleitet. Das Summensignal des Addierers 2 wird als Minuend auf einen Subtrahierer 3 geschaltet, der ausgangsseitig mit einem Integrierer 4 verbunden ist. Der vom Integrierer 4 gebildete Modell-Ständerfluß-Raumzeiger $\underrightarrow{\psi}$ μm gelangt als Minuend zu einem Subtrahierer 5, dem ein Multiplizierer 6 nachgeschaltet ist, der das Differenzsignal des Subtrahierers 5 mit Rrm/Lσm multipliziert und einem Addierer 7 zuführt. Dabei entspricht Rrm dem Modell-Rotor-Widerstand und Lσm der Modell-Streuinduktivität.

Das Summensignal des Addierers 7 wird mittels eines Integrierers 8 integriert, wodurch der Modell-Rotorfluß-Raumzeiger $\underrightarrow{\psi}$rm erhalten wird. Dieser Raumzeiger wird einem Multiplizierer 9 sowie als Subtrahend dem Subtrahierer 5 zugeleitet. Der Multiplizierer 9 beaufschlagt den Raumzeiger mit 1/Lσm und gibt das derart gebildete Signal als Subtrahend an einen Subtrahierer 10, dem als Minuend der mit Hilfe eines Multiplizierers 11 mit 1/Lμm+1/Lσm multiplizierte Modell-Ständerfluß-Raumzeiger $\underrightarrow{\psi}$μm anliegt, wobei Lμm der Modell-Magnetisierungsinduktivität entspricht. Als Differenzsignal bildet der Subtrahierer 10 den Modell-Ständerstrom-Raumzeiger $\underrightarrow{i}$sm und führt diesen als Subtrahend einem Subtrahierer 12 zu. Als Minuend liegt diesem Subtrahierer 12 der Ständerstrom-Raumzeiger $\underrightarrow{i}$s an. Der Ständerstrom-Raumzeiger $\underrightarrow{i}$s wird ferner mittels eines Multiplizierers 13 mit dem Ständer-Widerstand Rs multipliziert und das derart erhaltene Produktsignal liegt dem Subtrahierer 3 als Subtrahend an.

Die vom Subtrahierer 12 gebildete Strom-Differenz $\underrightarrow{i}$s- $\underrightarrow{i}$sm gelangt zu zwei Multiplizierern 14, 15, wobei die Strom-Differenz vom Multiplizierer 14 mit einem niedrigen Verstärkungsfaktor Kilow und vom Multiplizierer 15 mit einem hohen Verstärkungsfaktor Kihigh beaufschlagt wird. Beide Produktsignale der Multiplizierer 14, 15 gelangen zu einem Umschalter 16, der bei kleiner Ständerfrequenz ωs das Produktsignal des Multiplizierers 15 und bei großer Ständerfrequenz das Produktsignal des Multiplizierers 14 auf den Addierer 2 schaltet.

Der vom Integrierer 8 gebildete Modell-Rotorfluß-Raumzeiger $\underrightarrow{\psi}$rm wird ferner einem Multiplizierer 17 zugeführt, der als weiteres Eingangssignal das mit Hilfe eines Multiplizierers 18 gebildete Signal jω erhält, wobei ω oder mechanischen Drehfrequenz entspricht und aus der Gleichung ω = 2 πp n erhalten wird (n = Drehzahl der Induktionsmaschine, p = Polpaarzahl). Das Produktsignal des Multiplizierers 17 wird dem Addierer 7 zugeführt.

Einem Rechner 19 werden der Ständerstrom-Raumzeiger $\underrightarrow{i}$s und der Modell-Ständerfluß-Raumzeiger $\underrightarrow{\psi}$μm zugeführt. Der Rechner 19 bildet hieraus den Drehmoment-Istwert Md nach der Gleichung

$$Md = \frac{3}{2} \cdot p \cdot Im[\overset{*}{\underset{\rightarrow}{\psi}}\mu . \underset{\rightarrow}{is}] = \frac{3}{2} \cdot p \cdot [\psi\alpha a . i\beta a - \psi\beta a . i\alpha a]$$

mit

$$\underset{\rightarrow}{is} = i\alpha a + j \cdot i\beta a$$

$$i\alpha a = ia$$

$$i\beta a = \frac{1}{\sqrt{3}} (ib-ic)$$

wobei

$\overset{*}{\underset{\rightarrow}{\psi}}\mu =$ konjungiert komplexer Raumzeiger der Ständerflußverkettungen,
$\psi\alpha a, \psi\beta a =$ orthogonale Komponenten des Ständerfluß-Raumzeigers,
$i\alpha a, i\beta a =$ orthogonale Komponenten des Ständerstrom-Raumzeigers,
$ia, ib, ic =$ Ständerströme der Induktionsmaschine.

Ein Betragsbildner 20 berechnet den Ständerfluß-Raumzeiger-Betrag $|\underset{\rightarrow}{\psi}\mu|$ aus dem Modell-Ständerfluß-Raumzeiger $\underset{\rightarrow}{\psi}\mu$m gemäß Gleichung

$$|\underset{\rightarrow}{\psi}\mu| = \sqrt{\psi\alpha a^2 + \psi\beta a^2}$$

Ein Subtrahierer 21 empfängt als Minuend den Flußbetrag-Sollwert $\hat{\psi}$ µref und als Subtrahend ein Flußbetrag-Testsignal $\Delta\psi$ µref und bildet hieraus den Fluß-Sollwert $\psi$ soll. Das Flußbetrag-Testsignal $\Delta\psi$ µref wird ferner einem Multiplizierer 22 zugeführt, der als weiteres Eingangssignal das von einem Rechner 23 gebildete Differenz-Drehmoment Md-Mdm empfängt, wobei Mdm dem Modell-Drehmoment-Istwert entspricht. Dem Rechner 23 werden der Modell-Ständerfluß-Raumzeiger $\underset{\rightarrow}{\psi}\mu$m und die Strom-Differenz $\underset{\rightarrow}{is}$-$\underset{\rightarrow}{is}$m zugeleitet.

Die Berechnung des Differenz-Drehmomentes erfolgt gemäß Gleichung

$$Md\text{-}Mdm = \frac{3}{2} \cdot p \cdot [\psi\alpha a \cdot (i\beta a - i\beta am) - \psi\beta a(i\alpha a - i\alpha am)]$$

wobei $i\alpha am, i\beta am =$ orthogonale Komponenten des Modell-Ständerstrom-Raumzeigers sind.

Das Produktsignal des Multiplizierers 22 wird über ein Gewichtungsglied 24 einem Integrierer 26 zugeleitet. Das Gewichtungsglied 24 beaufschlagt in Abhängigkeit des auf das Kippmoment Mkipp bezogenen Drehmoment-Sollwertes Msoll das Produktsignal des Multiplizierers 22 mit dem Faktor +1, -1 oder 0 und bewirkt so die bei generatorischem Betrieb gegenüber dem motorischen Betrieb notwendige Umkehrung des Regelsinns sowie bei kleinem Sollmoment eine Ausblendung der Regelung. Zur Bildung des Signales Msoll/Mkipp kann ein Dividierer 25 vorgesehen sein. Das Ausgangssignal des Integrierers 26 entspricht dem Modell-Rotorwiderstand Rrm, dividiert durch die Modell-Streuinduktivität Lσm.

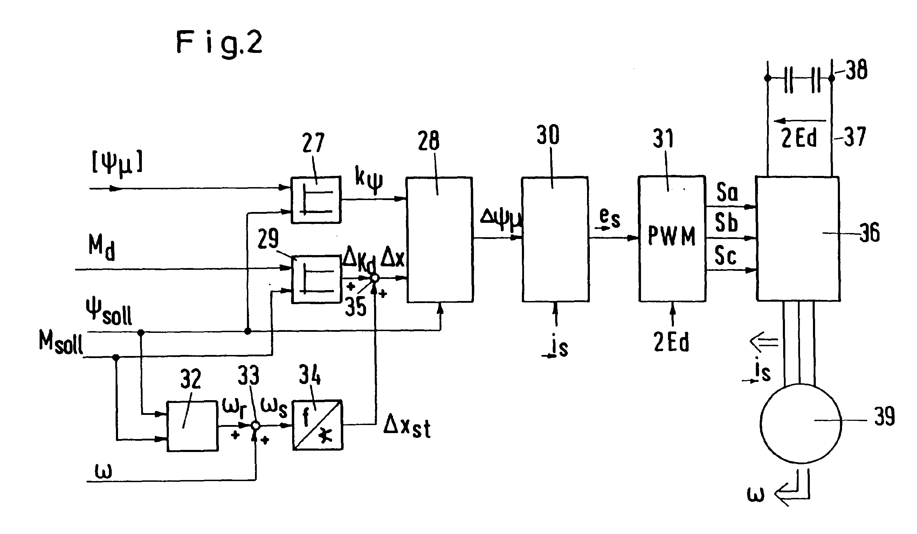

In Figur 2 ist als Beispiel für den Einsatz des unter Figur 1 im einzelnen erläuterten Maschinenmodells die Basisstruktur einer Indirekten Selbstregelung gezeigt. Eine derartige Basisstruktur ist aus der Dissertation von M. Jänecke, Die direkte Selbstregelung bei Anwendung im Traktionsbereich, Bochum, 1991, Seite 61 bekannt. Es ist ein Fluß-Regler 27 (P-Regler) vorgesehen, der eingangsseitig den Ständerfluß-Raumzeiger-Betrag $|\underset{\rightarrow}{\psi}\mu|$ und den Fluß-Sollwert $\psi$ soll empfängt und hieraus einen Flußbetragskorrekturfaktor k$\psi$ bildet. Dieser Flußbetragskorrekturfaktor wird einem Rechner 28 zugeleitet.

Ein Drehmoment-Regler 29 (P-Regler) erhält eingangsseitig den Drehmoment-Istwert Md und den Drehmoment-Sollwert Msoll und bildet hieraus einen dynamischen Anteil $\Delta$ xd der Winkeländerung, der in einem Addierer 35 mit einem stationären Anteil $\Delta$ xst der Winkeländerung summiert wird, wodurch sich eine Winkeländerung $\Delta$ x des Ständerflußraumzeigers ergibt, die dem Rechner 28 zugeführt wird. Um den stationären Anteil $\Delta$ xst zu ermitteln, wird zunächst unter Einsatz eines Rechners 32 aus dem Fluß-Sollwert ψsoll und dem Drehmoment-Sollwert Msoll die Rotorfrequenz ωr bestimmt und mittels eines Addierers 33 mit der mechanischen Drehfrequenz ω zur Ständerfrequenz ωs summiert. Ein Frequenz/Winkelumsetzer 34 wandelt die Ständerfrequenz ω s in den stationären Anteil $\Delta$ xst der Winkeländerung um.

Der Rechner 28 berechnet den Differenz-Ständerfluß-Raumzeiger $\Delta \underset{\rightarrow}{\psi} \mu$ aus dem Flußsollwert ψ soll, dem Flußbetragskorrekturfaktor kψ und der Winkeländerung $\Delta$x. Ein weiterer Rechner 30 bildet aus dem Differenz-Ständerfluß-Raumzeiger $\Delta \underset{\rightarrow}{\psi} \mu$ und dem Ständerstrom-Raumzeiger $\underset{\rightarrow}{i}$s den Ständerspannungs-Raumzeiger $\underset{\rightarrow}{e}$s. Ein Pulsbreitenmodulator 31 formt aus dem Ständerspannungs-Raumzeiger $\underset{\rightarrow}{e}$s und der Zwischenkreisspannung 2Ed die Schaltsignale Sa, Sb, Sc für die Wechselrichter-Stränge.

In Figur 2 ist ferner der Wechselrichter 36 mit Zwischenkreis 37, Zwischenkreiskondensatoren 38 und Induktionsmaschine 39 skizziert.

Wie aus der vorstehenden Schaltungsbeschreibung hervorgeht, wird erfindungsgemäß dem normalerweise in einem Betriebspunkt konstanten Sollwert für die Regelung des Betrags der Ständerflußverkettungen $\hat{\psi}$µref eine Test-Wechselgröße $\Delta \psi$ µref überlagert, deren Amplitude wenige Prozent des Betrag-Sollwertes beträgt, und deren Frequenz im Bereich der Rotor-Kippfrequenz bei konstantem Ständerflußbetrag gewählt wird. Weiterhin wird der Verstärkungsfaktor Kihigh so gewählt, daß der resultierende Einfluß der korrigierenden Stromdifferenz ($\underset{\rightarrow}{i}$s-$\underset{\rightarrow}{i}$sm) bei dieser Frequenz schon nicht mehr erheblich ist. Wenn man erfindungsgemäß aus der Strom-differenz $\underset{\rightarrow}{i}$s-$\underset{\rightarrow}{i}$sm und dem Raumzeiger $\underset{\rightarrow}{\psi}$µm der Modell-Ständerflußverkettungen das zugehörige Differenz-Drehmoment Md-Mdm ausrechnet, so pulsiert diese Größe im wesentlichen mit der Frequenz des Testsignals $\Delta \psi$ µref, wenn Rr und Rrm nicht übereinstimmen.

Durch die Verwendung der Stromdifferenz $\underset{\rightarrow}{i}$s-$\underset{\rightarrow}{i}$sm werden bei der Produktbildung nach der angegebenen Gleichung die normalen, durch die Wechselrichterspeisung bedingten Wechselanteile des Drehmoments weitgehend kompensiert. Weiterhin wird durch die vorstehend genannten Regeln erreicht, daß die mit Testfrequenz pulsierende Drehmomentdifferenz Md-Mdm etwa gleichphasig mit dem Flußbetrag-Testsignal $\Delta \psi$ µref schwingt, wenn Rrm kleiner ist als Rm und gegenphasig, wenn Rrm größer ist als Rm. Nach Multiplikation der Momentendifferenz Md-Mdm mit dem Flußbetrag-Testsignal $\Delta\psi$ µref erhält man ein Rrm-Korrektursignal, dessen Mittelwert nur verschwindet, wenn Rr und Rrm übereinstimmen. Durch das Rrm-Korrektursignal wird der Modell-Rotor-Widerstand Rrm solange über eine im wesentlichen integral wirkenden Regelung verstellt, bis er mit dem wirklichen Rotorwiderstand übereinstimmt.

Durch die erfindungsgemäße Einwirkung des Testsignals $\Delta\psi$ µref allein auf den Flußbetrag-Sollwert $\hat{\psi}$ µref wird nicht nur ein vorteilhaft minimaler Mehraufwand für die Signalverarbeitung erreicht, sondern durch die unveränderte, entkoppelte Kombination von Flußbetrag- und Drehmomentregelung im ISR-Bereich (ISR-Verfahren = Verfahren der Indirekten-Ständergrößen-Regelung) des DSR-Verfahrens (Direkte Selbstregelung) sichergestellt, daß die ständige Variation des Flußbetrages nicht zu entsprechender Pulsation des Drehmomentes führt.

**Patentansprüche**

1. Verfahren zur Regelung von Flußbetrag und Drehmoment einer über einen Stromrichter gespeisten Induktionsmaschine, wobei ein Modell-Ständerstrom-Raumzeiger ( $\underset{\rightarrow}{i}$sm), ein Modell-Ständerfluß-Raumzeiger ($\underset{\rightarrow}{\psi}$µm), ein Modell-Drehmoment-Istwert (Mdm) und ein Modell-Ständerspannungs-Raumzeiger ( $\underset{\rightarrow}{e}$sm) gebildet werden, <u>dadurch gekennzeichnet,</u> daß einem vorgegebenen Flußbetrag-Sollwert ($\hat{\psi}$ µref) ein Flußbetrag-Testsignal ($\Delta\psi$ µref) überlagert wird, daß aus der Stromdifferenz ($\underset{\rightarrow}{i}$s- $\underset{\rightarrow}{i}$sm) zwischen Ständerstrom-Raumzeiger ($\underset{\rightarrow}{i}$s) und Modell-Ständerstrom-Raumzeiger ($\underset{\rightarrow}{i}$sm) und dem Modell-Ständerfluß-Raumzeiger ($\underset{\rightarrow}{\psi}$µm) das Differenz-Drehmoment (Md-Mdm) zwischen Drehmoment-Istwert (Md) und Modell-Drehmoment-Istwert (Mdm) berechnet wird, daß durch Multiplikation dieses Differenz-Drehmomentes (Md-Mdm) mit dem Flußbetrag-Testsignal ($\Delta\psi$ µref) ein Signal zur Verstellung des Modell-Rotor-Widerstands (Rrm) gebildet wird und daß dieser Modell-Rotor-Widerstand (Rrm) über eine im wesentlichen integral wirkende Regelung verstellt wird, bis er mit dem Rotor-Widerstand (Rr) übereinstimmt.

2. Verfahren nach Anspruch 1, dadurch gekennzeichnet, daß ein Flußbetrag-Testsignal ($\Delta\psi$ µref) gewählt wird, dessen Amplitude wenige Prozent des Flußbetrag-Sollwertes ($\hat{\psi}$µref) beträgt und dessen Frequenz sich im Bereich der Rotor-Kippfrequenz bei konstantem Ständerflußbetrag bewegt.

3. Verfahren nach Anspruch 1 und/oder 2, dadurch gekennzeichnet, daß der Verstärkungsfaktor (Kihigh), mit dem die Stromdifferenz ($\underset{\rightarrow}{i}$s-$\underset{\rightarrow}{i}$sm) zwischen Ständerstrom-Raumzeiger ($\underset{\rightarrow}{i}$s) und Modell-Ständerstrom-Raumzeiger ($\underset{\rightarrow}{i}$sm) bei kleinen Ständerfrequenzen (ωs) beaufschlagt wird, so gewählt wird, daß der resultierende Einfluß der korri-

gierenden Stromdifferenz ( $i_s$-$i_{sm}$) bei der Frequenz des Flußbetrag-Testsignales ($\Delta\psi$ µref) nicht erheblich ist.

## Claims

1. Method for controlling the absolute flux value and torque of an induction machine fed via a power converter, a model stator current space vector ( $i_{sm}$), a model stator flux space vector ($\psi_\mu m$), a model actual torque value (Mdm) and a model stator voltage space vector ($e_{sm}$) being formed, characterized in that an absolute flux value test signal ($\Delta\psi_\mu$ref) is superimposed on a prescribed desired absolute flux value ($\psi_\mu$ref), in that the differential torque (Md-Mdm) between the actual torque value (Md) and the model actual torque value (Mdm) is calculated from the current difference ( $i_s$-$i_{sm}$) between the stator current space vector ( $i_s$) and model stator current space vector ($i_{sm}$) and the model stator flux space vector ($\psi_\mu m$), in that signal for adjusting the model rotor resistance (Rrm) is formed by multiplying this differential torque (Md-Mdm) by the absolute flux value test signal ($\Delta\psi_\mu$ref), and in that this model rotor resistance (Rrm) is adjusted by an essentially integrally acting control until it agrees with the rotor resistance (Rr).

2. Method according to Claim 1, characterized in that an absolute flux value test signal ($\Delta\psi_\mu$ref) is selected whose amplitude is a few percent of the desired absolute flux value ($\psi_\mu$ref) and whose frequency varies within the range of the rotor sweep frequency given a constant stator absolute flux value.

3. Method according to Claim 1 and/or Claim 2, characterized in that the amplification factor (Kihigh) applied to the current difference ($i_s$- $i_{sm}$) between the stator current space vector ($i_s$) and model stator current space vector ($i_{sm}$) for low stator frequencies ($\omega$s) is selected such that the resulting influence of the correcting current difference ($i_s$-$i_{sm}$) is not substantial in the case of the frequency of the absolute flux value test signal ($\Delta\psi_\mu$ref).

## Revendications

1. Procédé de réglage d'une valeur de flux et d'un couple de rotation d'une machine à induction alimentée par un convertisseur de courant, dans lequel un vecteur spatial de courant de stator d'un modèle ($i_{sm}$), un vecteur spatial de flux de stator du modèle ($\psi_\mu m$), une valeur instantanée de couple de rotation du modèle (Mdm) et un vecteur spatial de tension de stator du modèle ($e_{sm}$) sont formés, caractérisé en ce qu'un signal de test de valeur de flux ($\Delta\psi_\mu$ref) est superposé à une valeur de consigne de valeur de flux ($\hat{\psi}_\mu$ref) prédéterminée, en ce que le couple de rotation de différence (Md-Mdm) entre la valeur instantanée de couple de rotation (Md) et la valeur instantanée de couple de rotation du modèle (Mdm) est calculée à partir de la différence de courant ($i_s$-$i_{sm}$) entre le vecteur spatial de courant de stator ($i_s$) et le vecteur spatial de courant de stator du modèle ($i_{sm}$) et à partir du vecteur spatial de flux de stator du modèle ($\psi_\mu m$), en ce qu'il est formé par une multiplication de ce couple de rotation de différence (Md-Mdm) et du signal de test de valeur de flux ($\Delta\psi_\mu$ref) un signal pour le réglage de la résistance de rotor du modèle (Rrm) et en ce que cette résistance de rotor du modèle (Rrm) est réglée par un réglage agissant essentiellement de façon intégrale, jusqu'à ce qu'elle corresponde à la résistance de rotor (Rr).

2. Procédé suivant la revendication 1, caractérisé en ce qu'il est choisi un signal de test de valeur de flux ($\Delta\psi_\mu$ref) dont l'amplitude s'élève à quelques pourcents de la valeur de consigne de valeur de flux ($\hat{\psi}_\mu$ref) et dont la fréquence se déplace dans la zone de la fréquence de balayage du rotor dans le cas d'une valeur de flux de stator constante.

3. Procédé suivant la revendication 1 et/ou 2, caractérisé en ce que le facteur d'amplification (Kihigh) avec lequel la différence de courant ($i_s$-$i_{sm}$) entre le vecteur spatial de courant de stator ($i_s$) et le vecteur spatial de courant de stator du modèle ($i_{sm}$) est alimenté dans le cas de basses fréquences de stator ($\omega$s), est choisi de façon à ce que l'influence résultante de la différence de courant de correction ( $i_s$-$i_{sm}$), dans le cas de la fréquence du signal de test de valeur de flux ($\Delta\psi_\mu$ref), n'est pas importante.

Fig.1

Fig.2

EP 0 660 503 B1